# EUROPEAN PATENT SPECIFICATION

(11) **EP 1 108 883 B1**
(45) Date of publication and mention of the grant of the patent: **04.05.2005**
(21) Application number: 00127437.2
(22) Date of filing: 14.12.2000
(51) Int. Cl.: F02M 37/10, B60K 15/077

(54) **Fuel supply system**
Brennstoffversorgungsvorrichtung
Système d'alimentation en carburant

(30) Priority: 15.12.1999 JP 35653499
(43) Date of publication of application: 20.06.2001
(73) Proprietor: AISAN KOGYO KABUSHIKI KAISHA, Obu-shi Aichi-ken (JP)
(72) Inventor: Nagai, Takashi, Obu-shi, Aichi-ken 474-0061 (JP); Haruta, Kazumi, Obu-shi, Aichi-ken 474-0061 (JP); Wada, Satomi, Obu-shi, Aichi-ken 474-0061 (JP); Toki, Tomonari, Obu-shi, Aichi-ken 474-0061 (JP)
(74) Representative: Kramer - Barske - Schmidtchen

(56) References cited:
- EP-A- 0 666 415
- EP-A- 0 875 412
- EP-A- 1 101 930
- GB-A- 2 328 659
- US-A- 5 900 140
- US-A- 5 951 050
- PATENT ABSTRACTS OF JAPAN vol. 1998, no. 04, 31 March 1998 (1998-03-31) & JP 09 317586 A (NOK CORP), 9 December 1997 (1997-12-09)
- PATENT ABSTRACTS OF JAPAN vol. 2000, no. 02, 29 February 2000 (2000-02-29) & JP 11 321354 A (MIKUNI ADEC CORP), 24 November 1999 (1999-11-24)
- PATENT ABSTRACTS OF JAPAN vol. 1999, no. 03, 31 March 1999 (1999-03-31) & JP 10 318064 A (NIFCO INC), 2 December 1998 (1998-12-02)

## Description

### BACKGROUND OF THE INVENTION

### Field of the Invention

The present invention relates to fuel supply systems, and more particularly, to fuel supply systems adapted to be disposed in a fuel tank of a vehicle.

### Description of the Related Art

In a known technique for reducing emissions from a fuel tank, a canister is filled with activated carbon and the canister is coupled to the fuel tank. The activated carbon adsorbs evaporated fuel emissions from the fuel disposed in the fuel tank when the engine is off. On the other hand, when the engine is running, the fuel adsorbed by the activated carbon is aspirated under negative intake pressure and this fuel is burned while the vehicle engine is operating. Therefore, the fuel disposed in the activated carbon is removed and the activated carbon can absorb evaporated fuel emissions again when the engine is stopped.

For example, as shown in EP 0 875 412, the canister is typically disposed within the engine compartment or within the vehicle body to the rear of a fuel tank. However, if the canister is disposed in these locations, the canister may be damaged in the event of a collision.

Further, the fuel tank is normally disposed in a location that resists external forces exerted against the vehicle during a collision in order to protect the fuel tank. As a result, if the canister is disposed near the fuel tank, damage to the canister in the event of a collision can be prevented or reduced. For example, Japanese Laid-Open Patent Publication No. 10-318051 discloses a fuel supply system in which a recess is formed within the fuel tank and the canister is disposed within in the recess. However, by forming a recess in the fuel tank, the capacity of the fuel tank is reduced.

Naturally, the capacity of the fuel tank will not be reduced if the canister is disposed on the top of the fuel tank without forming a recess in the fuel tank. However, the fuel tank for a passenger car may be disposed under the rear seat. In that case, space above the fuel tank is limited and the designer may have no choice other than to dispose the canister within a recess formed in the fuel tank.

Further, Japanese Laid-Open Patent Publication No. 9-195861 discloses a fuel supply system in which a mounting hole is formed in the fuel tank and the canister is mounted partially within the fuel tank to thereby close or fill the mounting hole. In this fuel supply system, the fuel tank capacity is not reduced as much as the above-noted system, in which a recess is formed in the fuel tank. However, it is necessary to seal a clearance between the fuel tank and the canister with a sealing device, such as a sealing gasket and a packing. Therefore, the operation of mounting the canister on the fuel tank is labor intensive. Further, fuel emissions evaporate and escape from the fuel tank by permeating through the sealing device. Because the sealing device usually is made of rubber, fuel vapors can permeate through the rubber sealing device and thereby increase the overall fuel emissions of the vehicle.

### SUMMARY OF THE INVENTION

It is, accordingly, one object of the present teachings to provide improved fuel supply systems.

This object is achieved by the invention of claim 1 and the further developments of the invention recited in the sub-claims.

In one aspect of the present teachings, a canister can be easily mounted in the fuel tank and evaporated fuel emissions that permeate from the fuel system can be reduced.

More specifically, the canister and a fuel pump are coupled to the set plate. Accordingly, it is not necessary to form a second mounting hole within the fuel tank in order to mount the canister on the fuel tank. Thus, it is not necessary to seal the clearance between the fuel tank and the second mounting hole with a sealing device. By reducing the number of holes in the fuel tank, fuel emissions from the fuel tank can be reduced.

Further, in another aspect of the present teachings, the canister, a fuel cutoff valve and the fuel pump may be connected to the set plate. In this case, a mounting hole is also not required for mounting the fuel cutoff valve. Thus, this aspect of the present teachings also provides an easily mountable canister and fuel cutoff valve that reduces evaporated fuel emissions from the fuel supply system.

Preferably, the canister and the fuel cutoff valve may be integrally formed with the set plate. In this case, the number of components is reduced, so that the fuel supply system can be manufactured more efficiently and costs can be reduced.

Further, a connecting member may be provided in order to connect the canister and the fuel cutoff valve and this connecting member may be mounted on the set plate. This construction also reduces evaporated fuel emissions that can permeate from the fuel supply system.

Additional objects, features and advantages of the present invention will be readily understood after reading the following detailed description together with the accompanying drawings and the claims.

### BRIEF DESCRIPTION OF THE DRAWINGS

FIG. 1 is a front view showing a first embodiment of the present teachings;
FIG. 2 is a plan view showing the first embodiment;
FIG. 3 is a partly broken-apart right side view showing the first embodiment;
FIG. 4 is a sectional view taken along line IV-IV in FIG. 2;
FIG. 5 is a sectional view of a canister in the first embodiment;
FIG. 6 is a fragmentary bottom view of the canister;
FIG. 7 is a front view showing a second embodiment of the present teachings;
FIG. 8 is a plan view showing the second embodiment;
FIG. 9 is a partly broken-apart right side view showing the second embodiment;
FIG. 10 is a sectional view taken along line X-X in FIG. 8;
FIG. 11 is a sectional view of a canister in the second embodiment;
FIG. 12 is a sectional view of a canister in a third embodiment;
FIG. 13 is a sectional view of a canister in a fourth embodiment;
FIG. 14 is a sectional view of a canister in a fifth embodiment; and
FIG. 15 is a fragmentary sectional view of a sixth embodiment.

### DETAILED DESCRIPTION OF THE INVENTION

Fuel supply systems may generally comprise a fuel pump, a fuel filter and a canister. The fuel pump may be adapted to supply fuel from a fuel tank to an internal combustion engine and the fuel pump may be connected to or mounted on a set plate. A mounting hole is formed in the fuel tank and the set plate is mounted on the mounting hole. The fuel pump may be disposed, either completely or partially, within the fuel tank by mounting the set plate on the fuel tank so as to close or seal the mounting hole.

If the canister is coupled to the fuel tank, evaporated fuel emissions from the fuel tank that permeate from the fuel system to the outside environment may be reduced. Thus, according to the present teachings, the canister is coupled to the set plate and it is not necessary to provide a canister mounting hole in the fuel tank. Accordingly, it is not necessary to seal a clearance between the fuel tank and the canister mounting hole with a sealing member, because a canister mounting hole is not required. Therefore, evaporated fuel emissions can be further reduced as compared to known fuel systems that include a sealing member disposed between the fuel tank and the canister. Moreover, a canister is provided that can be easily connected to the fuel tank.

Preferably, at least a portion of the canister may be integrally formed with the set plate, thereby reducing the number of components and reducing manufacturing costs.

In another representative embodiment of the present teachings, a fuel cutoff valve may be connected to the fuel tank. The fuel cutoff valve may communicate evaporated fuel emissions from the fuel tank to the canister when the vehicle is operating according to normal conditions. However, if the vehicle is tilted or turned over, the fuel cutoff valve may prevent liquid fuel disposed in the fuel tank from entering the canister. The canister and the fuel cutoff valve also may be connected to the set plate, thereby eliminating the need to provide both a canister mounting hole and a fuel cutoff valve mounting hole in the fuel tank. As in the above noted embodiments, this feature may reduce evaporated fuel emissions from the fuel supply system.

In another representative embodiment of the present teaching, a connecting passage may be provided to couple the canister to the fuel cutoff valve. If the canister and the fuel cutoff valve are connected to the set plate, the length of the connecting passage can be reduced. Naturally, by reducing the length of the connecting passage, evaporated fuel emissions permeating through the connecting passage can be reduced.

Preferably, the set plate and the other components that are mounted on the set plate may define the connecting passage. The connecting passage may comprise a resin, which can reduce evaporated fuel emissions as compared to a rubber connecting passage. In fact, evaporated fuel emissions from the connecting passage can be substantially eliminated.

Each of the additional features and constructions disclosed above and below may be utilized separately or in conjunction with other features and constructions to provide improved fuel supply systems. Detailed representative examples of the present teachings, which examples utilize many of these additional features and constructions in conjunction, will now be described in detail with reference to the accompanying drawings. This detailed description is merely intended to teach a person of skill in the art further details for practicing preferred aspects of the present teachings and is not intended to limit the scope of the invention. Only the claims define the scope of the claimed invention. Therefore, combinations of features and constructions disclosed in the following detail description may not be necessary to practice the invention in the broadest sense, and are instead taught merely to particularly describe some representative examples of the invention.

### First Embodiment

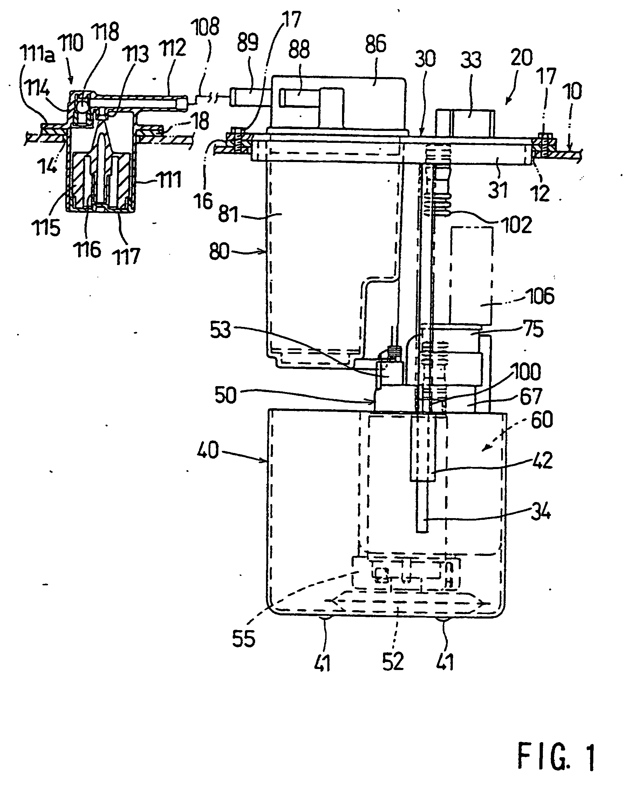

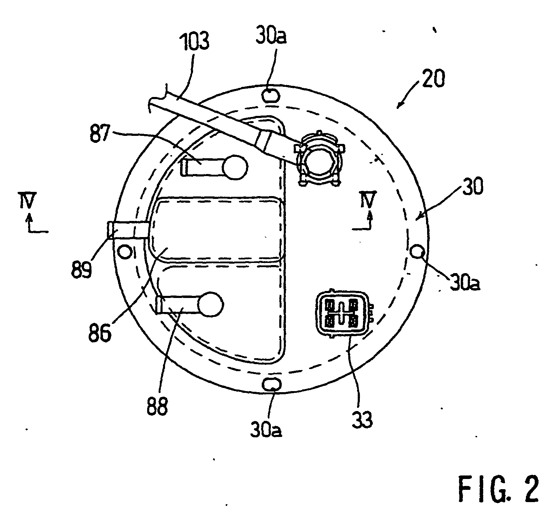

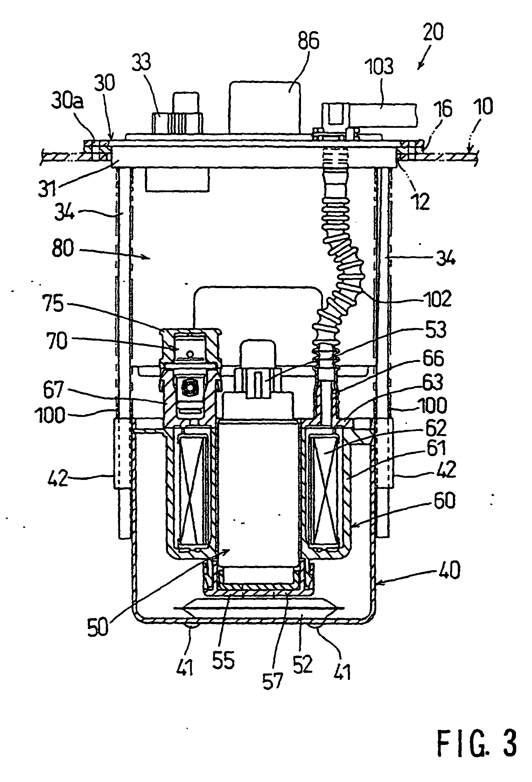

A first embodiment of the invention will now be described with reference to FIGS. 1 to 6. FIG. 1 is a front view of a fuel supply system 20 of the first embodiment, FIG. 2 is a plan view thereof, and FIG. 3 is a partly broken-apart right side view thereof.

As shown in FIGS. 1 and 3, in the fuel supply system 20 of this embodiment, a reserve cup 40, a fuel pump 50, a fuel filter 60, a pressure regulator 70 and a canister 80 are connected to a set plate 30. A mounting hole 12 is formed in a fuel tank 10. The set plate 30 is fitted in the mounting hole 12 of the fuel tank 10 so to close or seal the mounting hole 12.

The fuel pump 50 will now be explained. As shown in FIG. 3, the fuel pump 50 is generally cylindrical and has a fuel inlet port (not shown) in the bottom. A suction filter 52 is connected to the fuel inlet port. An electric connector 53 (see FIG. 1) and a fuel exhaust port (not shown) are provided on the upper end portion of the fuel pump 50. The fuel pump 50 is activated when a current is supplied via the electric connector 53. The fuel pump 50 draws fuel from the reserve cup 40, which will be described below, through the suction filter 52. The fuel pump 50 then increases the pressure of the fuel and exhausts the fuel through the fuel exhaust port. Additional techniques for designing suction filters are described in US Patent Nos. 5,120,434 and 5,607,578.

The fuel filter 60 will now be explained. As shown in FIG. 3, the fuel filter 60 includes a filter case 61 that has a generally cylindrical shape having a bottom, a filter element 62 that is housed within the filter case 61 and has a generally cylindrical shape, and a filter cover 63 that closes the open top of the filter case 61. In this embodiment, the filter case 61 and the filter cover 63 are made of resin.

The filter cover 63 is joined to the filter case 61. In this state, the lower end surface of the filter element 62 contacts the bottom surface of the filter case 61 and forms a tight seal. Further, the upper end surface of the filter element 62 contacts the underside of the filter cover 63 and forms a tight seal. Thus, the interior of the filter case 61 is partitioned into a space on the inner peripheral side of the filter element 62 and a space on the outer peripheral side of the filter element 62.

The filter cover 63 has an inlet port (not shown) having an open lower end. The inlet port communicates with the space on the outer peripheral side of the filter element 62. Further, the filter cover 63 has an outlet port 66 having an open upper end. The outlet port 66 communicates with the space on the inner peripheral side of the filter element 62 in the filter case 61.

A pressure regulator mounting portion 67 is formed in the filter cover 63. The pressure regulator mounting portion 67 communicates with the space on the inner peripheral side of the filter element 62 within the filter case 61.

A hollow portion is formed in the inner peripheral side of the filter case 61 and the fuel pump 50 is inserted into the hollow portion through an open bottom. A mounting stay 55 is attached to the bottom of the filter case 61, so that the fuel pump 50 is supported in a manner to prevent removal. A cushion rubber 57 is provided between the filter case 61 and the mounting stay 55 and thus elastically supports the fuel pump 50.

The fuel exhaust port of the fuel pump 50 is connected to the inlet port of the filter cover 63 to form a tight seal when the fuel pump 50 is inserted into the hollow portion of the filter case 61. Fuel flows out through the fuel exhaust port of the fuel pump 50 and is led into the inlet port of the filter cover 63. The fuel is then filtered through the filter element 62 and exhausted through the outlet port 66 of the filter cover 63.

The pressure regulator 70 will now be explained. As shown in FIG. 3, the pressure regulator 70 is mounted on the pressure regulator mounting portion 67 to form a tight seal and to prevent removal. The pressure regulator 70 regulates the pressure of the fuel exhausted from the fuel filter 60, i.e. the pressure of the fuel supplied to the internal combustion engine, to a predetermined pressure.

The reserve cup 40 will now be explained. As shown in FIGS. 1 and 3, the reserve cup 40 has a generally cylindrical shape. A plurality of projections 41 is formed on the bottom of the reserve cup 40. In this embodiment, the reserve cup 40 is made of resin.

The reserve cup 40 is attached to the filter case 61 and the fuel filter 60 mounted within the filter case 60. In this state, the lower surface of the suction filter 52 substantially contacts the bottom surface of the reserve cup 40. Two cylindrical guide portions 42 are integrally formed on the outside surface of the reserve cup 40.

The reserve cup 40 is disposed within the fuel tank 10 with the projections 41 contacting the bottom surface (not shown) of the fuel tank 10. A jet pump (not shown) is disposed within the reserve cup 40. The jet pump feeds fuel from the fuel tank 10 into the reserve cup 40 by pumping action that utilizes the pressure of the return fuel that flows out of the pressure regulator 70.

The set plate 30 will now be explained. As shown in FIGS. 1 and 3, the set plate 30 has a generally disc-like shape with an annular guide fitting portion 31 extending from the underside of the set plate 30. Further, the set plate 30 has a tube connecting portion (not shown) extending vertically through the set plate 30 and an electric connector 33 having a terminal that extends vertically through the set plate 30. The guide fitting portion 31 can be fitted into the mounting hole 12 of the fuel tank 10. In this embodiment, the set plate 30 is made of resin.

As shown in FIGS. 1 and 3, two guide columns 34 extend from the guide fitting portion 31 of the set plate 30. The guide columns 34 are inserted into the cylindrical guide portions 42 of the reserve cup 40 to permit the cylindrical guide portions 42 to slide with respect to the guide columns 34. A coil spring 100 is fitted around each of the guide columns 34. The coil spring 100 is disposed between the guide fitting portion 31 and the cylindrical guide portion 42 and serves to urge the reserve cup 40 downward with respect to the set plate 30.

The electric connector 53 (see FIG. 1) of the fuel pump 50 is electrically connected to the electric connector 33 of the set plate 30 on the underside of the set plate 30. Further, a power supply connector (not shown) is electrically connected to the electric connector 33 of the set plate 30 on the top side of the set plate 30.

As shown in FIG. 3, an upper end of a communication tube 102 is connected to the tube connecting portion (not shown) of the set plate 30 on the underside of the set plate 30. A lower end of the communication tube 102 is connected to the outlet port 66 of the fuel filter 60. Further, as shown in FIGS. 2 and 3, one end of a main tube 103 is connected to the tube connecting portion of the set plate 30. The other end of the main tube 103 is connected to a delivery pipe (not shown) that delivers pressurized fuel to the internal combustion engine.

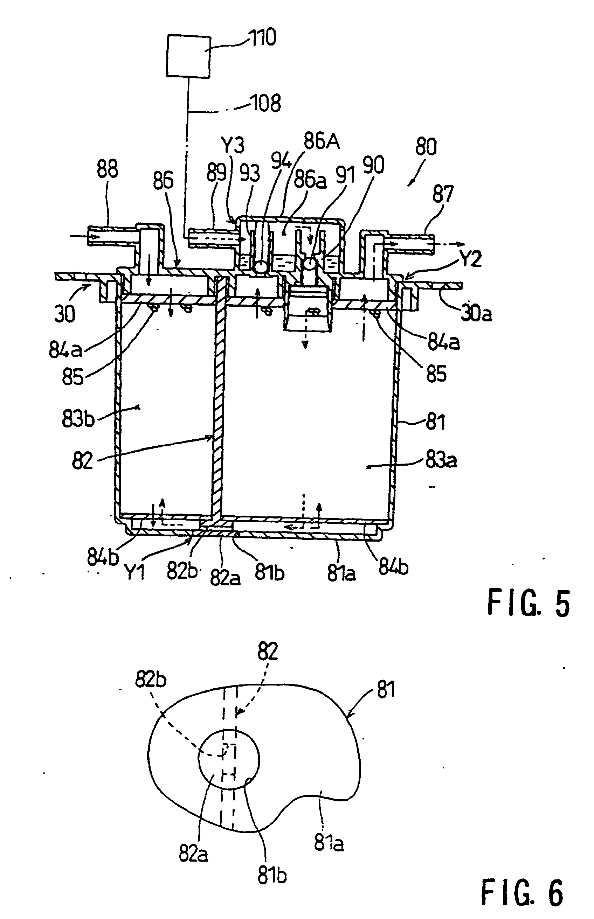

The canister 80 will now be explained. As shown in FIG. 1, the canister 80 is attached to the set plate 30. As shown in FIG. 5, the canister 80 is disposed within a generally cylindrical case (canister case) 81 and the case 81 is integrally formed with the set plate 30. Thus, the fuel pump 50 and the canister 80 are mounted on the set plate 30 and the set plate 30 is mounted within the fuel tank 10.

The inner space of the canister case 81 is divided by a partition 82 into two adsorption chambers 83a, 83b having different capacities. The adsorption chamber 83a having a larger capacity and the adsorption chamber 83b having a smaller capacity are hereinafter referred to as a first adsorption chamber 83a and a second adsorption chamber 83b, respectively.

A generally disc-like seat portion 82a extends downwardly from generally the medial portion of the lower end of the partition 82. The seat portion 82a is fitted into a positioning hole 81b that is formed in a bottom plate 81a of the canister 81 (see FIG. 6) and is welded to the bottom plate 81a (at weld Y1 in FIG. 5). A communication passage 82b is formed in the seat portion 82a and permits the first adsorption chamber 83a to communicate with the second adsorption chamber 83b.

As shown in FIG. 5, permeable filter plates 84a, 84b are disposed in the upper and lower portions, respectively, of the first and the second adsorption chambers 83a, 83b. The first and the second adsorption chambers 83a, 83b are filled with absorbing material. In this embodiment, activated carbon 85 is used as the absorbing material. The open top of the canister 81 is closed by welding a canister cover 86 to the canister case 81 (at weld Y2 in FIG. 5). In this embodiment, the canister cover 86 is made of resin.

As shown in FIG. 5, a purge port 87 is formed in the canister cover 86 and communicates with the first adsorption chamber 83a via the filter plate 84a. The purge port 87 communicates with an inlet pipe (not shown) coupled to the internal combustion engine.

As shown in FIG. 5, an air port 88 is formed in the canister cover 86 and communicates with the second adsorption chamber 83b via the filter plate 84a. The air port 88 is open to the outside environment by utilizing a labyrinth structure (not shown) disposed within the vehicle body.

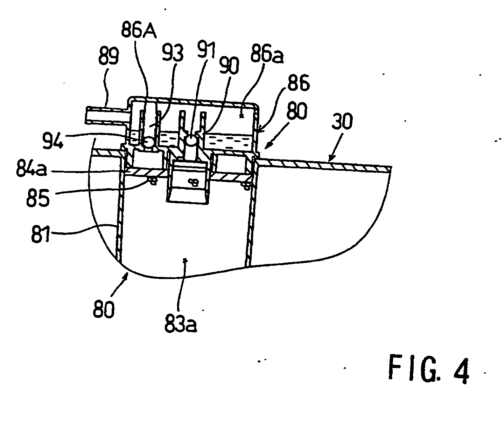

As shown in FIG. 5, a communication chamber 86a is formed in the canister cover 86 and is located above the first adsorption chamber 83a. A cover material 86A covers the top of the communication chamber 86a and is welded to the canister cover 86 (at weld Y3 in FIG. 5). Further, the canister cover 86 has an evaporation port 89 that communicates with the communication chamber 86a, a positive pressure port 90 that permits the first adsorption chamber 83a to communicate with the communication chamber 86a, and a negative pressure port 93 that permits the first adsorption chamber 83a to communicate with the communication chamber 86a via the filter plate 84a. FIG. 4 is a sectional view taken along line IV-IV in FIG. 2.

As shown in FIGS. 4 and 5, a positive pressure valve 91 comprising a non-return valve is disposed within the positive pressure port 90. The positive pressure valve 91 is normally closed, and it opens when the pressure within the communication chamber 86a exceeds a predetermined pressure. Further, a negative pressure valve 94 comprising a non-return valve is disposed within the negative pressure port 93. The negative pressure valve 94 is normally closed, and it opens when the pressure within the communication chamber 86a is less than a predetermined pressure.

As shown in FIG. 1, a fuel gauge 106 is disposed on the top of the filter cover 63 of the fuel filter 60. The fuel gauge 106 detects vertical movement of a float (not shown) using a sensor and thus detects the amount of fuel within the fuel tank 10. A fuel indicator (not shown) provided in the passenger compartment indicates the amount of fuel based upon the output of the fuel gauge 106.

As shown in FIG. 1, the above-described fuel supply system 20 is disposed in the fuel tank 10 by mounting the set plate 30 on the fuel tank 10 so as to close or seal the mounting hole 12 of the fuel tank 10. At this time, the guide fitting portion 31 of the set plate 30 is fitted into the mounting hole 12 of the fuel tank 10. Further, the outer peripheral portion of the set plate 30 is mounted within the opening edge portion of the mounting hole 12 of the fuel tank 10 via a sealing gasket 16 and is secured by bolts 17. Thus, the set plate 30 is secured to the fuel tank 10. As shown in FIG. 2, bolt insertion holes 30a for receiving the bolts 17 are formed in the outer peripheral portion of the set plate 30.

As shown in FIG. 1, a fuel cutoff valve 110 is mounted within a fuel cutoff valve mounting hole 14 that is formed in the fuel tank 10. A mounting portion 111a of the fuel cutoff valve 110 is mounted within the opening edge portion of the mounting hole 14 of the fuel tank 10 via a sealing gasket 18 to seal the mounting hole 14 and is fastened by bolts (not shown). Thus, the fuel cutoff valve 110 is secured to the fuel tank 10.

The fuel cutoff valve 110 will now be explained. As shown in FIG. 1, the fuel cutoff valve 110 has a case (valve case) 111 and a cover plate 117. The valve case 111 has a generally cylindrical shape that is open to the bottom and includes a mounting portion 111a. A connecting port 112 is integrally formed with the valve case 111 and extends laterally from the upper end portion of the valve case 111. One end of a connecting hose 108 is connected to the connecting port 112. The other end of the connecting hose 108 is connected to the evaporation port 89 of the canister 80. The connecting port 112, the connecting hose 108 and the evaporation port 89 of the canister 80 form a connecting passage (evaporation line) for connecting the fuel cutoff valve 110 and the canister 80.

The inner space of the valve case 111 communicates with the connecting port 112 via a valve opening 113 and a communication port 114. A valve 115 that opens and closes the valve opening 113 and a balance spring 116 that urges the valve 115 are disposed within the valve case 111. The valve 115 and the balance spring 116 are prevented from removal by the cover plate 117 that is attached to the valve case 111.

The valve 115 normally opens the valve opening 113. In this state, evaporated fuel emissions within the fuel tank 10 are exhausted into the communication chamber 86a of the canister 80 through the valve opening 113, the connecting port 112, the connecting hose 108 and the evaporation port 89. On the other hand, when the vehicle is tilted or rolled over and the level of liquid fuel within the fuel tank 10 reaches a predetermined level, the valve 115 moves upward and closes the valve opening 113, thereby preventing liquid fuel within the fuel tank 10 from flowing out into the communication chamber 86a of the canister 80 through the valve opening 113, the connecting port 112, the connecting hose 108 and the evaporation port 89.

Further, a relief valve 118 comprising a non-return valve is disposed within the communication port 114. The relief valve 118 normally closes the communication port 114. On the other hand, when the pressure within the fuel tank 10 reaches a predetermined pressure, the relief valve 118 opens the communication port 114, thereby preventing the pressure within the fuel tank 10 from exceeding the predetermined pressure.

The operation of the above-described fuel supply system 20 will now be explained.

When the fuel pump 50 is actuated by the internal combustion engine, the fuel pump 50 draws fuel within the reserve cup 40 through the suction filter 52 and increases the pressure of the fuel. Fuel exhausted from the fuel exhaust port (not shown) of the fuel pump 50 is supplied into the main tube 103 via the inlet port of the fuel filter 60, the filter element 62, the outlet port 66 and the communication tube 102. The fuel pressure adjusted to a predetermined pressure by the pressure regulator 70.

When the vehicle is operating according to normal conditions, the valve 115 opens the valve opening 113, so that the fuel cutoff valve 110 exhausts evaporated fuel emissions within the fuel tank 10 into the communication chamber 86a of the canister 80. On the other hand, when the vehicle is tilted or rolled over, the valve 115 closes the valve opening 113, so that liquid fuel within the fuel tank 10 is prevented from flowing out into the communication chamber 86a of the canister 80. Further, when the pressure within the fuel tank 10 reaches a predetermined pressure, the relief valve 118 opens the communication port 114, so that the pressure within the fuel tank 10 is prevented from exceeding the predetermined pressure.

When the valve 115 of the fuel cutoff valve 110 opens the valve opening 113 while the engine is not operating, evaporated fuel emissions within the fuel tank 10 are directed from the fuel cutoff valve 110 into the communication chamber 86a of the canister 80 through the connecting hose 108 (see dotted arrows in FIG. 5). Then, when the positive pressure valve 91 opens due to the pressure of the evaporated fuel emissions, the evaporated fuel emissions directed into the first absorption chamber 83a through the positive pressure port 90. Thereafter, the fuel emissions are absorbed by the activated carbon 85 within the first absorption chamber 83a. Further, the evaporated fuel emissions are directed into the second absorption chamber 83b through the lower filter plate 84b of the first absorption chamber 83a, the communication hole 82b of the seat portion 82a and the lower filter plate 84b of the second absorption chamber 83b. The evaporated fuel emissions are then absorbed by the activated carbon 85 within the second absorption chamber 83b.

When the internal combustion engine is running, the negative intake pressure of the internal combustion engine acts on the inside of the first absorption chamber 83a via the purge port 87 and the upper filter plate 84a of the first absorption chamber 83a. As a result, evaporated fuel that has been absorbed by the activated carbon 85 within the first absorption chamber 83a is aspirated from the activated carbon 85 and supplied to the internal combustion engine via the purge port 87. Further, the negative intake pressure that has acted on the inside of the first absorption chamber 83a acts on the inside of the second absorption chamber 83b via the lower filter plate 84b of the first absorption chamber 83a, the communication hole 82b of the seat portion 82a and the lower filter plate 84b of the second absorption chamber 83b. As a result, the evaporated fuel that has been absorbed by the activated carbon 85 within the second chamber 83b is aspirated from the activated carbon 85 and supplied the internal combustion engine. When the evaporated fuel is aspirated from the activated carbon 85 within the first and second chambers 83a, 83b, the activated carbon 85 can begin to absorb evaporated fuel emissions again.

If the pressure within the fuel tank 10 decreases below a predetermined pressure, the negative pressure acts on the communication chamber 86a via the connecting port 112 of the fuel cutoff valve 110, the connecting hose 108 and the evaporation port 89. If the negative pressure valve 94 opens due to negative pressure, air is directed into the communication chamber 86a, passing through the air port 88, the upper filter plate 84a of the second absorption chamber 83b, the second absorption chamber 83b, the lower filter plate 84b, the communication hole 82b of the seat portion 82a, the lower filter plate 84b of the first absorption chamber 83a, the first absorption chamber 83a, the upper filter plate 84a and the negative pressure port 93 in this order (see solid arrows in FIG. 5). Further, air that has been directed into the communication chamber 86a flows into the fuel tank 10 via the evaporation port 89, the connecting hose 108, the connecting port 112 of the fuel cutoff valve 110 and the valve opening 113. As a result, the pressure within the fuel tank 10 is prevented from decreasing below the predetermined pressure.

In the first embodiment, the set plate 30 is mounted within the mounting hole 12 of the fuel tank 10 so as to seal the mounting hole 12. As a result, the fuel pump 50 and the canister 80 are disposed in the fuel tank 10. Therefore, it is not necessary to provide a separate mounting hole for the canister 80 in the fuel tank 10 and thus to seal a clearance between the fuel tank 10 and the canister 80 with a sealing device, such as a sealing gasket or packing. Therefore, evaporated fuel emissions that would permeate through a sealing device for a canister mounting hole can be eliminated, because a canister mounting hole is not necessary. Further, the canister 80 can be easily mounted within the fuel tank 10.

Moreover, in the first embodiment, the canister case 81 is integrally formed with the set plate 30, so that the manufacturing is facilitated and thus costs can be reduced.

When the vehicle has been tilted or rolled, the fuel in the liquid phase in the fuel tank may tend to flow back into the canister 80. Also, when the gaseous fuel existing within the connecting hose 108 and the evaporation port 89 has been cooled, the gaseous fuel may be liquefied, so that the liquefied fuel may tend to flow back in to the canister 80. When these occur, adhesive contents in the liquid fuel may adhere to the positive pressure valve 91 and/or the negative pressure valve 94, so that the canister 80 can not properly operate. Otherwise, the liquid fuel may enter the first absorption chamber 83a through the valve 91 and/or the valve 94. This may result in degradation of the activated carbon in the first absorption chamber 83a. As a result, the function of the canister may be degraded. In order to overcome these drawbacks, the communication chamber 86a may be equipped with a fuel reservoir that can store the flow-back liquid fuel.

### Second Embodiment

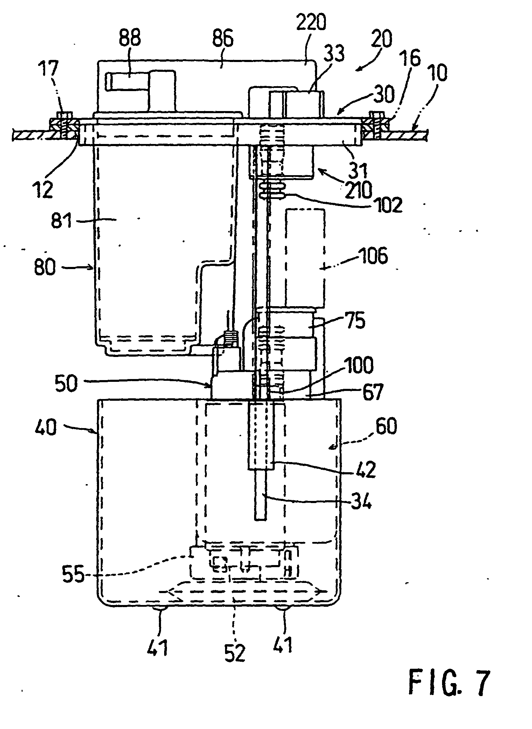

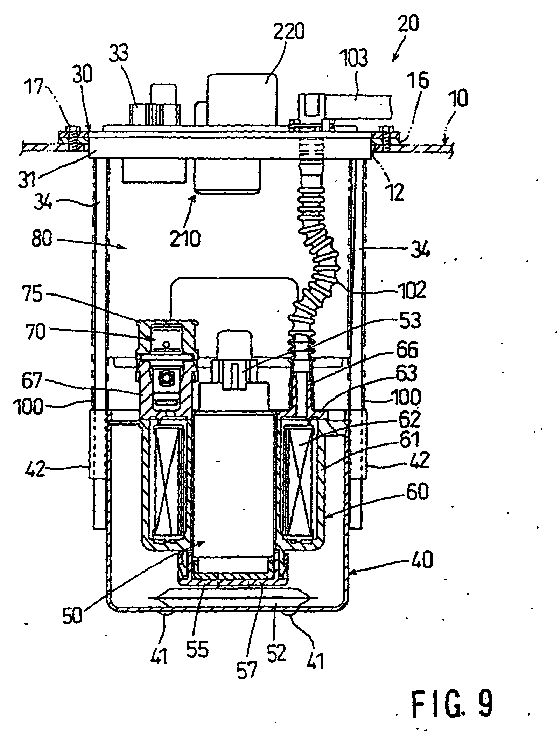

A second embodiment will now be explained with reference to FIGS. 7 to 11. FIG. 7 is a front view showing the second embodiment, and FIG. 9 is a partly broken-apart right side view showing the second embodiment. The second embodiment is different from the first embodiment in that the fuel cutoff valve is also mounted on the set plate. Therefore, it is only necessary to describe the structure of the fuel cutoff valve mounted on the set plate in detail, because the other components may be identical to the first embodiment.

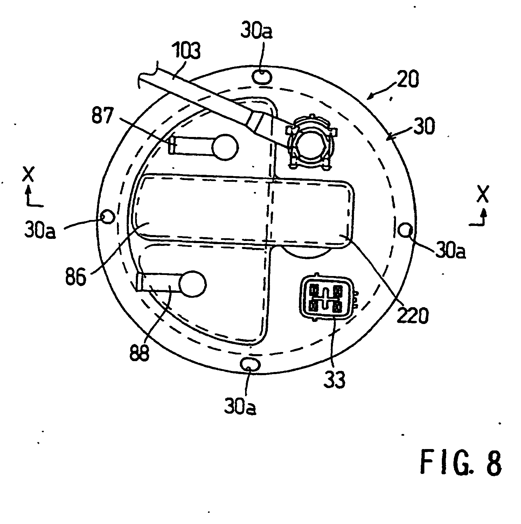

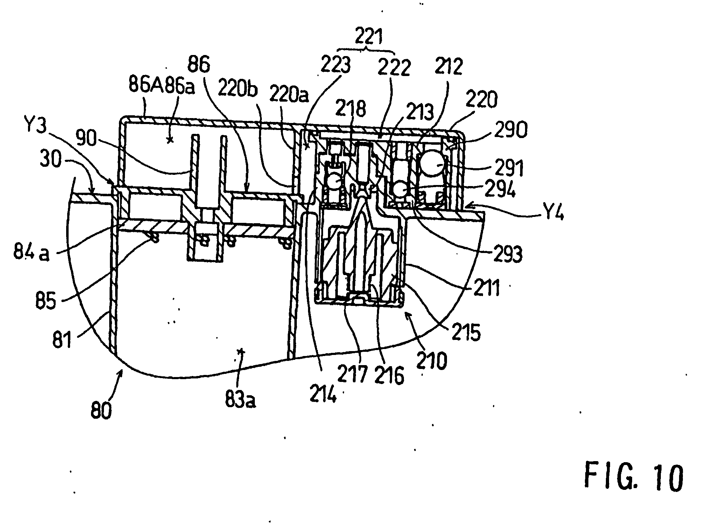

As shown in FIG. 10, which is a sectional view taken along line X-X in FIG. 8, a case (valve case) 211 of a fuel cutoff valve 210 is integrally formed with the set plate 30. The set plate 30 also serves as the mounting portion 111a of the fuel cutoff valve 110 shown in FIG. 1.

The cover material 86A for covering the top of the communication chamber 86a of the canister 80 is designed to cover the top and the side of the communication chamber 86a. Further, a case cover 220 is integrally formed with the cover material 86A. The case cover 220 is welded to the valve case 211 (the set plate 30) (at weld Y4 in FIG. 10), and the cover material 86A is welded to the canister cover 86 (at weld Y3 in FIG. 10).

A filling member 212 is disposed between a top surface of the valve case 211 (the set plate 30) and the opposing surface of the case cover 220 to form a tight seal, thereby defining a connecting passage 221 that connects the fuel cutoff valve 110 and the canister 80.

As shown in FIG. 10, the connecting passage 221 has a connection chamber 222 and a communication chamber 223. The connection chamber 222 communicates with the inner space of the valve case 211 via the valve opening 213 and the communication port 214. The communication chamber 223 (hereinafter referred to as a "second communication chamber") is divided from the communication chamber 86a (hereinafter referred to as a "first communication chamber") of the canister 80 by a partition 220a, and the second communication chamber 223 communicates with the first communication chamber 86a via an opening 220b that is formed in the partition 220a.

Further, the second communication chamber 223 communicates with the connection chamber 222 via a positive pressure port 290 and a negative pressure port 293. Similar to the first embodiment, a positive pressure valve 291 comprising a non-return valve is disposed within the positive pressure port 290. The positive pressure valve 291 is normally closed, and it opens when the pressure within the connection chamber 222 falls below a predetermined pressure. Similar to the first embodiment, a negative pressure valve 294 comprising a non-return valve is disposed within the negative pressure port 293. The negative pressure valve 294 is normally closed, and it opens when the pressure within the first absorption chamber 83a, the first communication chamber 86a and the second communication chamber 223 is less than a predetermined pressure.

The positive pressure valve 91, the negative pressure port 93 and the negative pressure valve 94 of the first embodiment are not provided in the second embodiment.

As shown in FIG. 10, a valve 215 that opens and closes the valve opening 213 and a balance spring 216 that biases the valve 215 are disposed within the valve case 211. The valve 215 and the balance spring 216 are prevented from being removed by a cover plate 217 that is attached to the valve case 211.

The valve 215 normally opens the valve opening 213. In this state, evaporated fuel emissions within the fuel tank 10 are exhausted into the first communication chamber 86a of the canister 80 through the valve opening 213, the connection chamber 222, the positive pressure port 290 and the second communication chamber 223. On the other hand, when the vehicle is tilted or rolled over and the level of the liquid fuel within the fuel tank 10 reaches a predetermined level, the valve 215 moves upward and closes the valve opening 213, so that liquid fuel within the fuel tank 10 is prevented from flowing out into the first communication chamber 86a of the canister 80 through the valve opening 213, the connection chamber 222, the positive pressure port 290 and the second communication chamber 223.

Similar to the first embodiment, a relief valve 218 comprising a non-return valve is disposed within a communication port 214 and normally closes the communication port 214. On the other hand, when the pressure within the fuel tank 10 reaches a predetermined pressure, the relief valve 218 opens the communication port 214, thereby preventing the pressure within the fuel tank 10 from exceeding the predetermined pressure.

The operation of the second embodiment is the substantially same as the first embodiment.

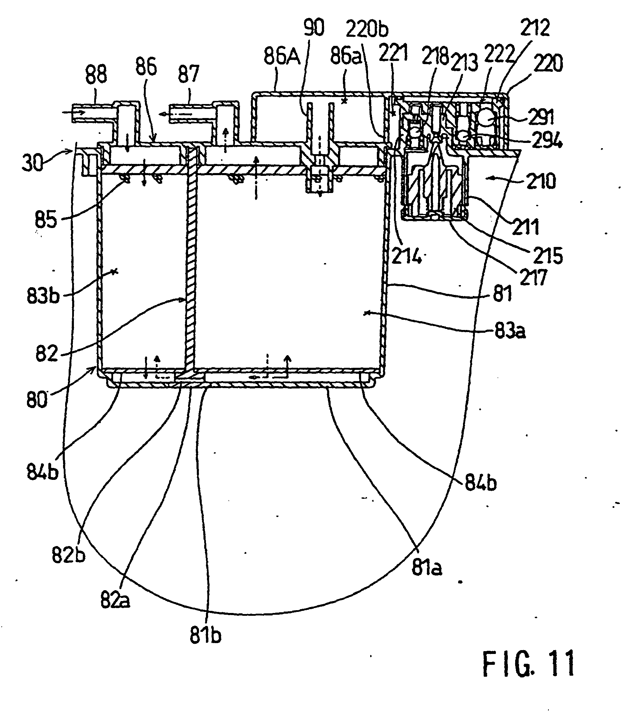

Specifically, when the vehicle is operating under normal conditions, the valve 215 of the fuel cutoff valve 210 opens the valve opening 213. Therefore, evaporated fuel emissions that are generated within the fuel tank 10 while the internal combustion engine is not operating are directed into the valve opening 213 of the fuel cutoff valve 210, the connection chamber 222 and the positive pressure port 290. Then, when the positive pressure valve 291 opens due to evaporated fuel pressure, the evaporated fuel emissions are directed from the positive pressure port 290 into the first and the second absorption chambers 83a and 83b in the canister case 81 through the second communication chamber 223, the first communication chamber 86a and the positive pressure port 290 (see dotted arrows in FIG. 11). The evaporated fuel emissions are then absorbed by the activated carbon 85 within the first and the second absorption chambers 83a and 83b. On the other hand, when the internal combustion engine is running, the negative intake pressure of the internal combustion engine acts on the first and the second absorption chambers 83a and 83b in the canister case 81 via the purge port 87. As a result, the evaporated fuel that has been absorbed by the activated carbon 85 within the first and the second absorption chambers 83a and 83b is aspirated from the activated carbon 85 by the internal combustion engine via the purge port 87 (see alternate long and short dashed arrows in FIG. 11).

Further, when the pressure within the fuel tank 10 decreases below a predetermined pressure, the negative pressure acts on the negative pressure port 293 via the valve opening 213 and the connection chamber 222. When the negative pressure valve 294 opens due to the negative pressure, air is communicated into the fuel tank 10, passing through the air port 88, the second absorption chamber 83b and the first absorption chamber 83a in the canister case 81, the positive pressure port 290, the first communication chamber 86a, the second communication chamber 223, the negative pressure port 293, the connection chamber 222 and the valve opening 213 in this order. As a result, the pressure within the fuel tank 10 is prevented from decreasing below the predetermined pressure.

Therefore, substantially the same effects as the first embodiment can be obtained with the second embodiment.

In the second embodiment, the set plate 30 is mounted in the mounting hole 12 of the fuel tank 10 so as to close or seal the mounting hole 12. Therefore, the fuel pump 50, the canister 80 and the fuel cutoff valve 210 are disposed within the fuel tank 10. Therefore, it is not necessary to provide a mounting hole for the fuel cutoff valve 210 in the fuel tank 10. Moreover, it is not necessary to seal a clearance between the fuel tank 10 and the fuel cutoff valve 210 with a sealing device, such as a sealing gasket or packing, because a fuel cutoff valve mounting hole is not required. Therefore, evaporated fuel emissions can be further reduced, and the fuel cutoff valve 210 can be easily mounted in the fuel tank 10.

Further, the canister case 81 and the valve case 211 are integrally formed with the set plate 30, so that the manufacturing is facilitated and thus costs can be reduced.

In addition, the set plate 30 and the cover material 86A and the filling member 212 that are mounted to the set plate 30 define the connecting passage 221. With this construction, evaporated fuel emissions that may permeate through the connecting passage can be greatly reduced compared with the case in which, for example, the connecting passage is a rubber hose and evaporated fuel emissions can be substantially eliminated. The connecting passage 221 that connects the canister 80 and the fuel cutoff valve 210 can be made shorter by forming the connecting passage 221 on the set plate 30. By thus making the connecting passage 221 shorter, evaporated fuel emissions that will permeate through the connecting passage can be also reduced.

Further, because the canister cover 86 of the canister 80 is integrally formed with the case cover 220 of the fuel cutoff valve 210, it is not necessary to form the canister cover 86 and the case cover 220 separately. Thus, manufacturing is facilitated and the number of the components and costs can be reduced.

### Third Embodiment

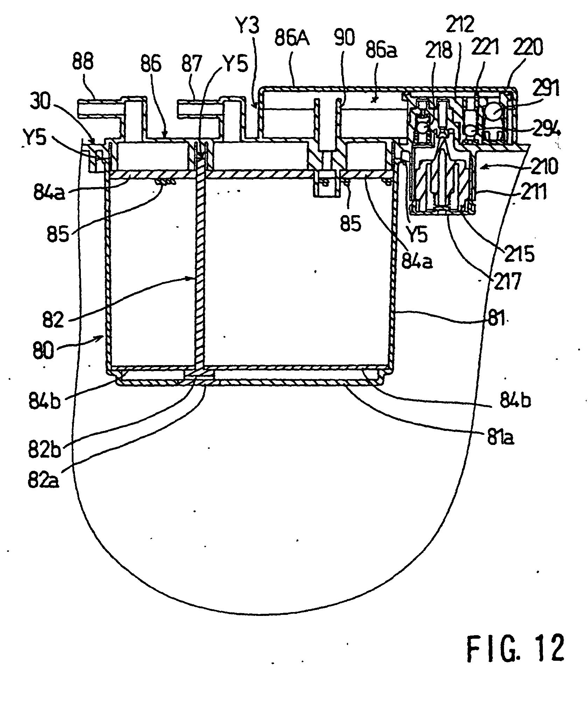

A third embodiment will now be explained with reference to FIG. 12. The third embodiment is a modification of the second embodiment. Therefore, only the modified portions will now be described in detail, and overlapping descriptions with the second embodiment will be omitted. In the third embodiment, as shown in FIG. 12, the case (canister case) 81 of the canister 80 is formed separately from the set plate 30. The canister cover 86, excluding the cover material 86A having the case cover 220, is integrally formed with the set plate 30.

In this embodiment, after the upper and lower filter plates 84a, 84b and the activated carbon 85 have been inserted into the canister case 81, the canister case 81 is welded to the set plate 30 (at weld Y5 in FIG. 12). Further, the cover material 86A having the case cover 220 is welded to the canister cover 86 (at weld Y3 in FIG. 12).

Substantially the same effects as the second embodiment can be obtained with the third embodiment.

### Fourth Embodiment

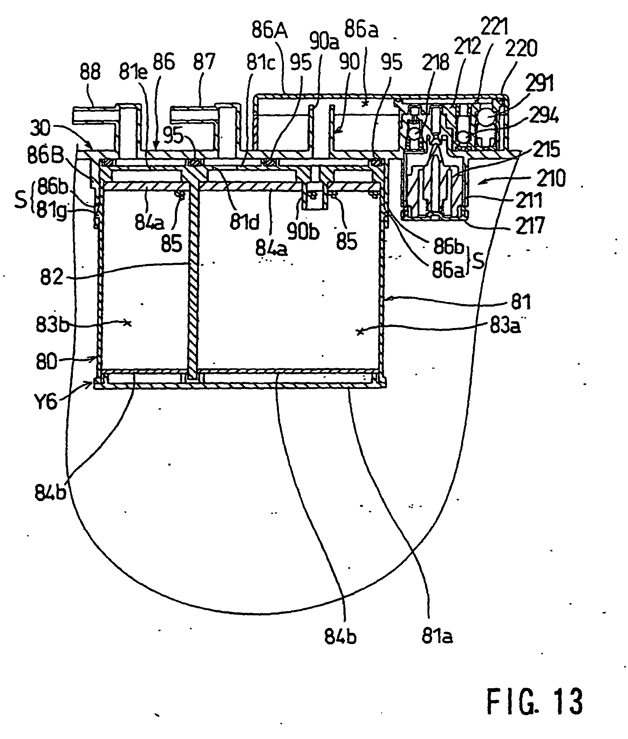

A fourth embodiment will now be explained with reference to FIG. 13. The fourth embodiment is a modification of the third embodiment. Therefore, only the modified portions will now be described in detail, and overlapping descriptions with the third embodiment will be omitted. In the fourth embodiment, similar to the third embodiment, the canister case 81 is formed separately from the set plate 30. In this embodiment, the canister case 81 is attached to the set plate 30 by snap-fitting.

The canister case 81 has an open bottom, and an upper plate 81c is integrally formed on the top of the canister case 81. The partition 82 and a lower half portion 90b of the positive pressure port 90 are integrally formed with the upper plate 81c. An upper half portion 90a of the positive pressure port 90 is integrally formed with the canister cover 86. The upper plate 81c is formed with a communication hole 81d that permits the first absorption chamber 83a to communicate with the purge port 87 and a communication hole 81e that permits the second absorption chamber 83b to communicate with the air port 88. Further, a groove (not shown) for receiving the sealing member is formed in the upper surface of the upper plate 81c.

A connection piece 86B is formed on the canister cover 86 and engagement holes 86b are formed in the connection piece 86B along the peripheral direction. Generally pointed engagement projections 81g are formed on the outside wall surface of the canister case 81 and engage the engagement holes 86b of the connection piece 86B. The engagement holes 86b and the engagement projections 81g form a snap fitting structure S that connects the canister case 81 with the set plate 30 (the canister cover 86). Alternatively, the engagement holes 86b may be formed in the canister case 81 and the engagement projections 81g may be formed on the connection piece 86B.

In this embodiment, after the upper and lower filter plates 84a, 84b and the activated carbon 85 have been inserted into the canister case 81, the bottom plate 81a is welded to the canister case 81 (at weld Y6 in FIG. 13). Further, the sealing member (for example, sealing rubber) 95 is fitted into the groove (unnumbered) formed in the upper surface of the upper plate 81c and serves to seal the clearance between the upper plate 81c and the canister cover 86. When the canister case 81 is pressed against the canister cover 86, the outside wall of the canister case 81 and/or the connection piece 86B of the canister cover 86 is elastically deformed so that the engagement projections 81g engage the engagement holes 86b. Thus, the canister case 81 is connected to the canister cover 86.

Substantially the same effects as the third embodiment can be obtained with the fourth embodiment.

### Fifth Embodiment

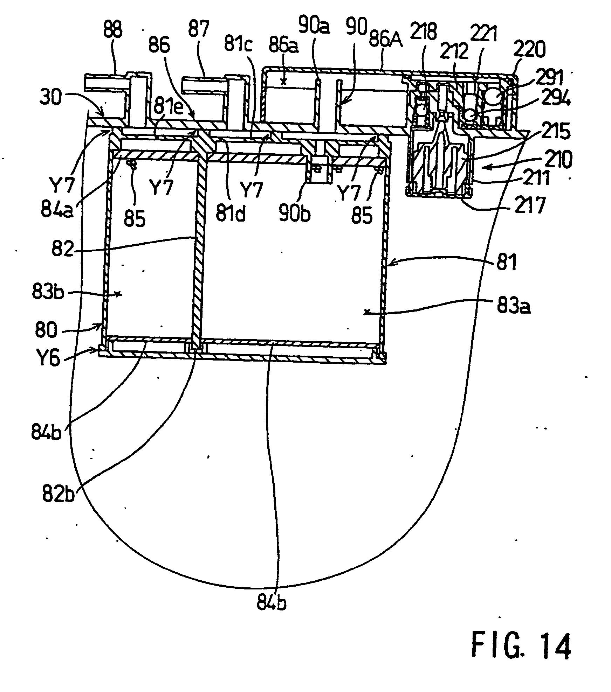

A fifth embodiment will now be explained with reference to FIG. 14. The fifth embodiment is a modification of the fourth embodiment. Therefore, only the modified portions will be described in detail, and overlapping descriptions with the fourth embodiment will be omitted. In the fifth embodiment, the upper plate 81c of the canister case 81 is welded to the set plate 30 (the canister cover 86) (at weld Y7 in FIG. 14).

Substantially the same effects as the fourth embodiment can be obtained with the fifth embodiment. Further, in the fifth embodiment, the sealing rubber 95 and the snap fitting device S of the fourth embodiment can be omitted.

### Sixth Embodiment

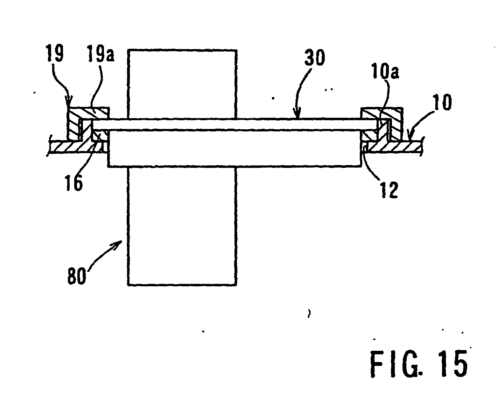

A sixth embodiment will now be explained with reference to FIG. 15. The sixth embodiment is a modification of the first embodiment. Therefore, only the modified portions will be described in detail, and overlapping descriptions with the first embodiment will be omitted. In the sixth embodiment, a different mounting structure is provided for mounting the set plate 30 on the fuel filter 10.

In this embodiment, a cylindrical mounting portion 10a is formed on the fuel tank 10 around the mounting hole 12 and extends upwardly. A threaded, tightening lock ring 19 is provided around the outer periphery of the cylindrical mounting portion 10a. A flange portion 19a is formed on and along the upper end of the lock ring 19 and extends inwardly.

In order to mount the set plate 30 on the fuel tank 10, the set plate 30 is first placed on the opening edge portion of the mounting hole 12 via the sealing gasket 16 and is fitted into the cylindrical mounting portion 10a. Then, the lock ring 19 is tightened to the cylindrical mounting portion 10a so that the flange portion 19a of the lock ring 19 presses the outer peripheral portion of the set plate 30 against the opening edge portion of the mounting hole 12. Thus, the set plate 30 is secured to the fuel tank 10.

The present invention is not limited to the constructions that have been described as the representative embodiments, but rather, may be added to, changed, replaced with alternatives or otherwise modified without departing from the scope of the invention.

Further, techniques for reducing static electricity build up in a fuel supply system are taught in Ueda et al, "Electrostatics of Fuel System for the Automobile," SAE Technical Paper Series (March 1999).

## Claims

1. A fuel supply system (20), comprising:
a set plate (30) adapted to be fitted into a mounting hole (12) of a fuel tank (10),
a fuel vapour canister (80) coupled to the set plate and
a fuel pump (50) coupled to the set plate,
**characterized in that**:
the canister (80) is disposed within a case (81) that is integrally formed with the set plate (30).

2. A fuel supply system as set forth in claim 1, wherein the cansister (80) is adapted to be disposed in the fuel tank (10) when the set plate is mounted in the mounting hole (12).

3. A fuel supply system as set forth in claim 1 or 2, further comprising a fuel cutoff valve (110, 210) coupled to the set plate (30).

4. A fuel supply system as set forth in claim 3, wherein the fuel cutoff valve (210) is disposed within a case (211) that is integrally formed with the set plate (30).

5. A fuel supply system as set forth in claim 4, further comprising a connecting passage (211) that connects the fuel cutoff valve (210) and the canister (80), wherein the connected passage is formed on the set plate (30).

6. A fuel supply system as set forth in claim 5, wherein the connecting passage (211) is defined by the set plate (30) and another component (86A, 212) that is coupled to the set plate.

7. A fuel supply system as set forth in any one of claims 3-6, wherein the set plate (30), the case (81) for the canister (80), and the case (211) for the fuel cutoff valve (210) are integrally formed of a resin.

8. A fuel supply system as set forth in any preceding claim, wherein the fuel pump (50) is adapted to be disposed, either completely or partially, within the fuel tank (10).

9. A fuel tank (10) having a mounting hole (12), and comprising
the fuel supply system as set forth in any one of claims 1-8, wherein the set plate (30) is mounted in the mounting hole such that the canister (80) and the fuel pump (50) are disposed within the fuel tank.

## Patentansprüche

1. Kraftstoffversorgungssystem (20), enthaltend:
eine Einsetzplatte (30), die geeignet ist, in ein Befestigungsloch (12) eines Kraftstofftanks (10) eingepasst zu werden,
einen Kraftstoffdampfkanister (80), der mit der Einsetzplatte verbunden ist und
eine mit der Einsetzplatte verbundene Kraftstoffpumpe (50),
**dadurch gekennzeichnet, dass**:
der Kanister (80) innerhalb eines Gehäuses (81) angeordnet ist, das integral mit der Einsetzplatte (30) ausgebildet ist.

2. Kraftstoffversorgungssystem nach Anspruch 1, wobei der Kanister (80) geeignet ist in dem Kraftstofftank (10) angeordnet zu werden, wenn die Einsetzplatte im Befestigungsloch (12) montiert wird.

3. Kraftstoffversorgungssystem nach Anspruch 1 oder 2, ferner enthaltend ein mit der Einsetzplatte (30) gekoppeltes Kraftstoffsperrventil (110, 210).

4. Kraftstoffversorgungssystem nach Anspruch 3, wobei das Kraftstoffsperrventil (210) innerhalb eines Gehäuses (211) angeordnet ist, das integral mit der Einsetzplatte (30) ausgebildet ist.

5. Kraftstoffversorgungssystem nach Anspruch 4, ferner enthaltend einen Verbindungsweg (211) der das Kraftstoffsperrventil (210) und den Kanister (80) verbindet, wobei der Verbindungsweg an der Einsetzplatte (30) gebildet ist.

6. Kraftstoffversorgungssystem nach Anspruch 5, wobei der Verbindungsweg (211) durch die Einsetzplatte (30) und eine weitere, mit der Einsetzplatte verbundene Komponente (86A, 212) definiert ist.

7. Kraftstoffversorgungssystem nach einem der Ansprüche 3 bis 6, wobei die Einsetzplatte (30), das Gehäuse (81) für den Kanister (80) und das Gehäuse (211) für das Kraftstoffsperrventil (210) integral aus einem Harz gebildet sind.

8. Kraftstoffversorgungssystem nach einem der vorhergehenden Ansprüche, wobei die Kraftstoffpumpe (50) geeignet ist entweder vollständig oder teilweise innerhalb des Kraftstofftanks (10) angeordnet zu werden.

9. Kraftstofftank (10) mit einem Befestigungsloch (12) und enthaltend
ein Kraftstoffversorgungssystem nach einem der Ansprüche 1 bis 8, wobei die Einsetzplatte (30) im Befestigungsloch so montiert ist, dass der Kanister (80) und die Kraftstoffpumpe (50) innerhalb des Kraftstofftanks angeordnet sind.

## Revendications

1. Circuit d'alimentation en carburant (20), comprenant :
une plaque de réglage (30) adaptée pour s'ajuster dans un trou de montage (12) d'un réservoir de carburant (10),
un absorbeur de vapeur de carburant (80) couplé à la plaque de réglage, et
une pompe à carburant (50) couplée à la plaque de réglage,
**caractérisé en ce que** :
l'absorbeur (80) est disposé à l'intérieur d'un carter (81) qui est d'un seul tenant avec la plaque de réglage (30).

2. Circuit d'alimentation en carburant selon la revendication 1, dans lequel l'absorbeur (80) est adapté pour être disposé dans le réservoir de carburant (10) lorsque la plaque de réglage est installée dans le trou de montage (12).

3. Circuit d'alimentation en carburant selon la revendication 1 ou 2, comprenant en outre une vanne de coupure de carburant (110, 210) couplée à la plaque de réglage (30).

4. Circuit d'alimentation en carburant selon la revendication 3, dans lequel la vanne de coupure de carburant (210) est disposée à l'intérieur d'un carter (211) qui est d'un seul tenant avec la plaque de réglage (30).

5. Circuit d'alimentation en carburant selon la revendication 4, comprenant en outre un passage de raccordement (211) qui raccorde la vanne de coupure de carburant (210) et l'absorbeur (80), dans lequel le passage raccordé est formé sur la plaque de réglage (30).

6. Circuit d'alimentation en carburant selon la revendication 5, dans lequel le passage de connexion (211) est défini par la plaque de réglage (30) et un autre composant (86A, 212) qui est couplé à la plaque de réglage.

7. Circuit d'alimentation en carburant selon l'une quelconque des revendications 3 à 6, dans lequel la plaque de réglage (30), le carter (81) pour l'absorbeur (80) et le carter (211) pour la vanne de coupure de carburant (210) sont faits d'un seul tenant, en résine.

8. Circuit d'alimentation en carburant selon l'une quelconque des revendications précédentes, dans lequel la pompe à carburant (50) est adaptée pour être disposée, soit complètement soit partiellement, à l'intérieur du réservoir de carburant (10).

9. Réservoir de carburant (10) comportant un trou de montage (12), et comprenant le système d'alimentation en carburant selon l'une quelconque des revendications 1 à 8, dans lequel la plaque de réglage (30) est installée dans le trou de montage de sorte que l'absorbeur (80) et la pompe à carburant (50) sont disposées à l'intérieur du réservoir de carburant (10).
